# EUROPÄISCHE PATENTSCHRIFT

(11) **EP 3 631 898 B1**
(45) Veröffentlichungstag und Bekanntmachung des Hinweises auf die Patenterteilung: **27.12.2023**
(21) Anmeldenummer: 18713846.6
(22) Anmeldetag: 21.03.2018
(51) Int. Cl.: H01R 4/02, H01R 43/02

(54) **FLEXIBLER VERBINDER**
FLEXIBLE CONNECTOR
CONNECTEUR FLEXIBLE

(30) Priorität: 01.06.2017 DE 102017112123; 26.07.2017 DE 102017116879
(43) Veröffentlichungstag der Anmeldung: 08.04.2020
(73) Patentinhaber: Auto-Kabel Management GmbH, 79688 Hausen i.W. (DE)
(72) Erfinder: SCHARKOWSKI, Oliver, 79669 Zell im Wiesental (DE)
(74) Vertreter: Cohausz & Florack
(86) Internationale Anmeldenummer: PCT/EP2018/057123
(87) Internationale Veröffentlichungsnummer: WO 2018/219515

(56) Entgegenhaltungen:
- WO-A1-2015/111509
- CN-U- 204 303 375
- DE-A1-102013 208 230
- DE-C1- 4 439 645
- DE-T5-112014 006 851
- JP-A- 2011 054 374
- US-A- 1 900 585
- US-A1- 2016 035 463

## Beschreibung

Der Gegenstand betrifft einen Verbinder, insbesondere einen Steckverbinder oder einen Batteriezellenverbindern.

Für die Kontaktierung von einzelnen Zellen in einem Batteriepack oder die Verbindung von Batteriepacks untereinander werden Verbinder eingesetzt, die hoch flexibel sein müssen. Die Kontaktierung von einzelnen Zellen in einem Batteriepack für Elektrofahrzeuge muss flexibel sein, um eventuelle Höhenunterschiede zwischen den einzelnen Zellen ausgleichen zu können. Die Zellverbinder werden in einer sehr großen Stückzahl in einem Batteriepack eingesetzt, da die jeweiligen Zellen miteinander verbunden werden müssen und eine sehr große Anzahl an Zellen in Batteriepacks für Elektrofahrzeuge zum Einsatz kommt. Aus diesem Grunde muss die Herstellung der Zellverbinder in einem möglichst voll automatisierten Prozess ablaufen können, um die Herstellungskosten gering zu halten. Das gleiche gilt auch für Hochvoltsteckverbinder, bei denen auch die Flexibilität von entscheidender Bedeutung ist, um eine einfache Montage des meist aus zwei Teilen bestehenden Steckers zu gewährleisten.

Es hat sich gezeigt, dass für solche Verbinder mehrschichtige metallische Bänder zum Einsatz kommen können. Unter mehrschichtigen metallischen Bändern sind im Folgenden sowohl Geflechte, Geflechtbänder als auch Laminate zu verstehen. Insbesondere Kupfergeflechte als auch Kupferlaminate, sogenannte Busbars, kommen zum Einsatz und können auch gegenständlich eingesetzt werden. Ein Kupfergeflecht ist aus sehr dünnen, miteinander verworrenen oder verwobenen Kupferlitzen gebildet. Diese bilden einen hoch flexiblen Leiter, der gewalzt werden kann und so als Kupfergeflechtband bereitgestellt werden kann. Die einzelnen Litzen haben ein Durchmesser von 0,1mm und kleiner. Die einzelnen Litzen sind somit äußerst dünn und die Stromtragfähigkeit des Kupfergeflechtbands ergibt sich nur durch die große Anzahl an Einzellitzen, die miteinander verwoben sind. Bei einem laminierten Kupferband werden die einzelnen Lagen aus Kupferblechen gebildet. Wenn nachfolgend von Blechen die Rede ist, so sind auch Folien mit gemeint. Die Bleche bzw. Folien haben dabei meist nur eine Stärke von 0,1mm und weniger.

Aufgrund dieser äußerst geringen Materialstärken sind die mehrschichtigen Bänder jedoch problematisch hinsichtlich der Kontaktierung mit Anschlussteilen. Um diese Kontaktierung zu ermöglichen, werden Anschlusselemente an den Bändern angeordnet. Die Anschlusselemente müssen jedoch stoffschlüssig mit dem Band gefügt werden. Bei diesen Fügeverfahren, insbesondere bei thermischen Fügeverfahren, werden die Fügepartner durch den Energieeintrag beschädigt. Bei Verwendung eines Geflechtbands entstehen z.B. Metallflitter die sich aus dem Verbund lösen können. Gerade in Batterieanwendungen sind solche Metallflitter jedoch zwingend zu vermeiden, da durch diese verursachte Kurzschlüsse größten Schaden anrichten können.

Es wurde bereits vorgeschlagen, die metallischen Bänder endseitig metallisch zu beschichten, insbesondere in einem Tauchbad zu verzinnen. Anschließend kann eine Anschlussöse als Anschlusselement in das Band gestanzt werden.

Aber auch solche Anschlussösen bieten meist nicht die ausreichende Festigkeit, da diese unmittelbar in das Material des Bandes und somit die äußerst dünnen Schichten des Bandes eingebracht werden.

Aus der CN 204 303 375 U ist eine flexible Verbindung für eine Bürste eines Gleichstrommotors beschrieben.

Auch wurde bereits vorgeschlagen, die einzelnen Schichten (auch einzelne Bänder genannt) zu beschichten, insbesondere mit Zinn, um anschließend die Bänder unter Vermittlung der Zinnschicht miteinander zu verbinden. Bei diesem Verfahren wird Energie in das Laminat eingebracht, so dass die Beschichtung aufschmilzt und eine intermetallische Verbindung entlang der Beschichtung gebildet wird. Hierbei kommt es jedoch zu einer sortenunreinen Verbindung, welche ggf. elektrisch oder auch hinsichtlich ihrer Haltbarkeit nachteilig sein kann.

Auch ein stoffschlüssiges Fügen mehrerer Lagen von Bändern unmittelbar, um ein laminiertes Kupferband zu erhalten, ist problematisch, da bei den stoffschlüssigen Fügeverfahren in die beiden äußeren, einander gegenüberliegenden Schichten des Bandes erhebliche Schweißenergie eingebracht werden muss, um alle Schichten verlässlich miteinander stoffschlüssig zu verbinden. Durch diese erhebliche Schweißenergie kann es dazu kommen, dass eine oder mehrere äußere Schichten abreißen oder verbrennen. Des Weiteren kann es zur Aufhärtung und damit zu Versprödung der Fügepartner kommen.

Aus diesem Grunde lag dem Gegenstand die Aufgabe zugrunde, einen flexiblen Verbinder zur Verfügung zu stellen, welcher kostengünstig herstellbar ist und gleichzeitig eine ausreichende Festigkeit für den Anschluss an elektrische Komponenten ermöglicht.

Diese Aufgabe wird durch einen Verbinder nach Anspruch 1 gelöst.

Es ist erkannt worden, dass zumindest ein, vorzugsweise beiden Enden des metallischen Bandes mit zumindest einem, vorzugsweise zumindest zwei Verstärkungselementen versehen werden. Das Verstärkungselement kann dabei in Form von Blechen oder Flachleitern zur Verfügung gestellt werden. Das Verstärkungselement kann zweiteilig sein und wird an den einander gegenüberliegenden Seiten bzw. Oberflächen des Bandes aufgelegt. Anschließend werden die Teile des Verstärkungselements zusammen mit dem Band stoffschlüssig verbunden. Es entsteht ein Schweißknoten am Bandende, welcher durch die einzelnen Schichten des metallischen Bandes und die Teile des Verstärkungselements gebildet ist. Unter den einzelnen Schichten des Bandes sind sowohl einzelne Schichten eines Laminats als auch einzelne Litzen eines Geflechts zu verstehen. Auch kann das Verstärkungselement nur einteilig sein. Dann kann das Verstärkungselement auf einer Oberfläche des Bandes aufliegen. Insbesondere ist das Verstärkungselement auf der Oberfläche, welche mit der Sonotrode bearbeitet wird. Somit wird das Verstärkungselement zwischen der Oberfläche des Bandes und einer Sonotrode angeordnet. Dies führt zu dem gewünschten Schutz des Bandes bei gleichzeitig optimiertem Materialeinsatz.

Das Verstärkungselement kann auch aus einer äußeren Lage der Schichten, also einer äußeren Schicht bzw. Teilen davon gebildet sein. Dann kann das die äußere Schicht des Bandes mit einer gegenüber den Schichten im Inneren des Bandes größeren Materialstärke gebildet sein. Insbesondere kann die Schichtdicke der das Verstärkungselement bildenden Schicht zumindest die 1,5 bis zweifache Schichtdicke einer inneren Schicht aufweisen.

Das Verstärkungselement ist vorzugsweise aus Blechen oder Flachleitern oder Plättchen gebildet. Ein erstes Teil des Verstärkungselementes wird auf das Band gelegt und ggf. ein zweites Teil des Verstärkungselements wird unter das Band gelegt. Anschließend wird mittels eines Fügeverfahrens, beispielsweise Ultraschallschweißen, Widerstandsschweißen, Löten oder dergleichen ein Verbund, insbesondere ein einziger Schweißknoten, aus dem oberen Teil und dem unteren Teil des Verstärkungselements und den dazwischen liegenden Schichten des Bandes hergestellt.

Anschließend kann die Anschlussgeometrie aus dem Schweißknoten gestanzt, geschnitten und spannhebend geformt werden. Außerdem kann ein Anschlusselement, beispielsweise eine Anschlussöse, in das Verstärkungselement und das Bandende eingebracht werden, beispielsweise mittels Stanzen oder Schneiden.

Durch das Verstärkungselement hat das Anschlusselement, insbesondere die Anschlussöse, eine erhöhte Auszugskraft gegenüber einem Band ohne ein solches Verstärkungselement. Durch eine geeignete Wahl der Materialstärke der Teile des Verstärkungselementes lässt sich die Auszugskraft definieren. Insbesondere können die Materialstärken der Teile des Verstärkungselementes größer sein als die Materialstärken der einzelnen Schichten bzw. Litzen des Bandes.

Wie bereits erläutert, ist vorgeschlagen, dass das mehrschichtige Band ein mehrschichtiges Laminat oder Geflecht ist. Nochmal sei erwähnt, dass unter Mehrschichtigkeit im Sinne dieser Anmeldung sowohl ein Laminat als auch ein Geflecht zu verstehen ist. Auch in einem Geflecht liegen die einzelnen Litzen übereinander und sind mehrschichtig.

Gemäß einem Ausführungsbeispiel wird vorgeschlagen, dass das Band bzw. dessen Schichten aus Kupfer, einer Kupferlegierung, Aluminium oder einer Aluminiumlegierung gebildet ist. Insbesondere eignen sich Bänder aus Kupfer, da diese eine besonders hohe Leitfähigkeit haben. Andere Metalle, beispielsweise Nichteisenmetall, Halbedelmetall oder Edelmetall sind ebenfalls möglich. Das Verstärkungselement kann ebenfalls aus Kupfer oder einer Kupferlegierung bzw. Aluminium oder Aluminiumlegierung gebildet sein. Es hat sich insbesondere herausgestellt, dass die Teile des Verstärkungselements aus einer Kupferlegierung, insbesondere Messing gebildet sein können. Es ist jedoch auch möglich, dass das Verstärkungselement aus einem anderen Metall, insbesondere Nichteisenmetall, Halbedelmetall oder Edelmetall gebildet sein kann.

Wie erwähnt, ist das Verstärkungselement aus einem oder zwei Teilen gebildet. Dabei kann das Verstärkungselement aus Blechen gebildet sein. Bleche können in Form von Plättchen oder Flachleitern kontinuierlich oder diskontinuierlich zur Verfügung gestellt werden. Die Bleche können auf einander gegenüberliegenden Oberflächen des Bandes angelegt werden. Anschließend erfolgt ein Verbinden der beiden Bleche mit den dazwischen liegenden Materialen des Bandes zu einem einzigen Knoten, insbesondere einem Schweißknoten bzw. nur eines Bleches mit dem Band zu einem einzigen Knoten, insbesondere einem Schweißknoten.

Ein Leiter aus einem Vollmaterial, insbesondere ein Flachleiter, wird von dem Band umgriffen.

Dann kann das Band mit dem Leiter unter Verwendung des Verstärkungselements verschweißt werden. Hierbei kann das Verstärkungselement das Band vollständig umgreifen. Dabei wird ein solches Band dazu verwendet, zwei Leiter aus Vollmaterial flexibel miteinander zu verbinden. Das Band umgreift kann jeweils ein stirnseitiges Ende eines Leiters.

Dann kann eventuell um die jeweilig umgriffenen Enden das Verstärkungselement gelegt werden oder dieses ist eventuell bereits durch eine äußere Lage des Bandes vorhanden. Das jeweilige Ende des Leiters kann mit dem Band in der hier gezeigten Weise verbunden werden. Die beiden Leiter sind dann durch das Band flexibel miteinander verbunden. Das Band ist dabei als Schlauch gebildet. Das Band wird aus einem Geflecht gebildet. Ein stirnseitiges Ende eines Leiters kann so durch das Band umgriffen sein. Die Leitungen sind in den Schlauch eingesteckt.

Zur Definition der Auszugskräfte kann es sinnvoll sein, die Materialstärken der beiden Teile des Verstärkungselements unterschiedlich zu gestalten. Insbesondere kann es vorkommen, dass an einer Öse als Anschlusselement an den beiden gegenüberliegenden Seiten unterschiedliche Kräfte auftreten, die durch unterschiedliche Materialstärken der Teile des Verstärkungselements kompensiert werden können.

Es wird vorgeschlagen, dass zumindest ein Teil des Verstärkungselements als schalenförmiges Element gebildet ist. Das schalenförmige Element kann in der Form eines Kabelschuhs gebildet sein. Das schalenförmige Element kann an zwei seitlichen Kanten aufgebogen sein und an den verbleibenden stirnseitigen Kanten kann das Element eben bleiben. Dann kann über eine offene, ebene Kante das Band in das schalenförmige Element eingelegt werden. Die seitlichen aufgebogenen Kanten des Elementes können seitlich als Anschlag für das Bandende dienen. Das schalenförmige Element kann an drei Kanten aufgebogen sein und an einer vierten verbleibenden Kante kann das Element eben bleiben. Dann kann über diese offene, ebene Kante das Band in das schalenförmige Element eingelegt werden. Die aufgebogenen Kanten des Elementes können sowohl seitlich als auch stirnseitig als Anschlag für das Bandende dienen.

Es ist bevorzugt, wenn die Teile des Verstärkungselementes als schalenförmige Elemente gebildet sind und somit in der Art einer Hülse das Bandende aufnehmen. Es ist jedoch auch bevorzugt, wenn nur ein schalenförmiges Element vorgesehen ist und ggf. ein zweites Teil des Verstärkungselementes als ebenes Blech gebildet ist. Im erstgenannten Fall, mit zwei schalenförmigen Elementen, sind die aufgebogenen Kanten insbesondere derart, dass die Höhe der Kanten in etwa der Hälfte der Höhe des Bandes entspricht. Ist nur ein schalenförmiges Element und ein dazu korrespondierendes flaches Blech vorgesehen, so ist die aufgebogene Kante insbesondere so geformt, dass deren Höhe der Materialstärke des Bandes in etwa entspricht. Dann kann das Blech auf der dem schalenförmigen Element gegenüber liegenden Seite des Bandes aufgesetzt werden und unmittelbar an den aufgebogenen Kanten anliegen. Bei zwei schalenförmigen Elementen liegen die jeweiligen aufgebogenen Kantenflächen aufeinander.

Die Teile des Verstärkungselementes werden miteinander verbunden. Ist ein schalenförmiges Element vorhanden, so entsteht insbesondere auch eine Verbindung an den aufgebogenen Kanten, insbesondere an den Kantenflächen. Dabei ist es möglich, dass die Kantenflächen von zwei schalenförmigen Elementen miteinander verbunden werden oder dass eine Kantenfläche eines schalenförmigen Elementes mit einer Oberfläche eines Bleches verbunden ist.

Das Verstärkungselement kann das Bandende seitlich und/oder stirnseitig überragen. So ist es beispielsweise möglich, dass das Verstärkungselement gleichzeitig eine Anschlussfahne bildet. Diese kann stirnseitig oder seitlich aus dem Bandende herausragen. Dann ist insbesondere ein Teil des Verstärkungselements mit einer um zumindest den Faktor 5, vorzugsweise den Faktor 10 größeren Materialstärke gebildet, als das jeweils andere Teil des Verstärkungselements. Insbesondere kann das schalenförmige Element mit einem über das stirnseitige Ende oder seitlich über das Band hinausragenden Blech, welches eine erheblich größere Materialstärke hat, als das schalenförmige Element, verbunden sein. Das Blech mit der größeren Materialstärke kann dann gleichzeitig als Anschlussfahne dienen. Eine Anschlussöse kann in diesem das Bandende überragenden Teile des Verstärkungselementes eingebracht, insbesondere gestanzt sein.

Gemäß einem Ausführungsbeispiel wird vorgeschlagen, dass in einem zentralen Bereich mit einem Abstand zu seinem seitlichen Kanten und/oder seiner stirnseitigen, vom Band wegweisenden Kante verschweißt ist. Somit ist umlaufend an drei Kanten das Verstärkungselement frei von einer Verschweißung. Die Kante, welche in Richtung des Bandes zeigt, ist bis zum äußeren Rand hin mit dem Band verschweißt.

Wie bereits erläutert, kann das Anschlusselement eine Anschlussöse sein. Diese ist insbesondere für die Aufnahme von Anschlussbolzen, Schrauben oder Nieten geeignet. Dabei kann die Anschlussöse durch eine sich durch das Band und die einander gegenüberliegenden Teile des Verstärkungselements erstreckende Öffnung gebildet sein. Die Öffnung kann dabei kreisrund sein. Auch ist es möglich, dass die Öffnung umlaufend unterschiedliche Durchmesser haben kann, insbesondere vierkantig oder sechskantig sein kann.

Ein besonders flexibler Einsatz eines gegenständlichen Verbinders ist dann ermöglicht, wenn dieser nicht nur an seinen distalen Enden mit Verstärkungselementen ausgestattet ist, sondern wenn zusätzlich zwischen den beiden distalen Enden des Bandes zumindest ein weiteres Verstärkungselement angeordnet ist. Dieses weitere Verstärkungselement kann entsprechend einem zuvor beschrieben Verstärkungselement, welches an dem Bandende angeordnet ist, geformt sein. Somit kann auch im Verlauf des Verbinders eine flexible, hohe Auszugskräfte aufweisende Verbindung ermöglicht werden.

Zumindest ein Teil eines Verstärkungselementes kann sich quer zur Längserstreckung des Bandes über eine seitliche Kante des Bandes hinaus erstrecken. Insbesondere kann ein solches Teil des Verstärkungselementes sich senkrecht zur Längserstreckungsrichtung über die seitliche Kante des Bandes hinaus erstrecken. Auch ist es möglich, dass sich voneinander in Längserstreckungsrichtung beabstandete Verstärkungselemente über unterschiedliche seitliche Kanten des Bandes hinaus erstrecken. Ein erstes Teil eines ersten Verstärkungselementes kann sich über eine erste seitliche Kante erstrecken und ein erstes Teil eines zweiten Verstärkungselementes kann sich über eine zweite, der ersten seitlichen Kante gegenüberliegende seitliche Kante hinaus erstrecken. Dabei können sich die jeweiligen Verstärkungselemente einander abwechseln, so dass sich intermittierend mal ein Teil eines Verstärkungselementes über die erste seitliche Kante hinaus erstreckt und sich anschließend ein Teil eines Verstärkungselementes über die zweite seitliche Kante hinaus erstreckt.

Auch ist es möglich, dass auf die Verstärkungselemente der distalen Enden sowie auf eventuelle Verstärkungselemente zwischen den distalen Enden Anschluss- oder Steckbolzen mittels eines Fügeverfahrens, beispielsweise Ultraschallschweißen, Widerstandsschweißen, Reibschweißen oder dergleichen gefügt werden.

Auch beschrieben ist ein Verfahren zur Herstellung eines Verbinders. Bei diesem Verfahren wird bevorzugt ein mehrschichtiges metallisches Band als Endlosband zur Verfügung gestellt. Ein Band kann beispielsweise von einem Coil abgewickelt werden. Auch kann ein Band von einer Rolle oder dergleichen abgewickelt werden. Natürlich ist das Band nicht endlos, sondern erstreckt sich im Verhältnis zu der Längserstreckung des Verbinders über eine erheblich größere Länge, insbesondere ist das Endlosband 100-fach, 1000-fach oder mehr länger, als der Verbinder.

Das Band wird einer Fügevorrichtung zugeführt und jeweils ein Teil eines Verstärkungselementes wird auf jeweils einer Seite des Bandes bzw. einer Oberfläche des Bandes an das Band angedrückt. Anschließend erfolgt ein stoffschlüssiges Fügen der Teile mit dem Band und nach dem Verschweißen wird das verschweißte Band aus der Fügevorrichtung entfernt.

Der Vorteil des gegenständlichen Verbinders liegt darin, dass keine Metallflitter entstehen. Die Fügewerkzeuge haben keinen direkten Kontakt zu den Schichten des Bandes, insbesondere den Litzen bzw. den einzelnen Folien oder Blechen. Dadurch ist eine sichere, langzeitstabile Kontaktierung möglich.

Zum Kontaktieren mit Anschlussteilen ist es möglich, entweder ein Anschlusselement, insbesondere eine Anschlussöse in das Verstärkungselement einzubringen oder mittels eines Kontaktierungsverfahrens, insbesondere eines stoffschlüssigen Kontaktierungsverfahrens, beispielsweise Ultraschallschweißen oder Widerstandsschweißen oder auch Löten mit anderen Anschlusselementen zu kontaktieren.

Ein weiteres Fügeverfahren, welches Anwendung finden kann, ist ein Laserschweißverfahren oder das Elektromagnetimpulsschweißen. Auch ist es möglich, die Anschlussöse mittels Laser aus dem Verstärkungselement auszuschneiden. Die Teile des Verstärkungselementes können rechteckig sein. Auch ist es möglich, dass die Kanten des Verstärkungselementes über große Radien miteinander verbunden sind. Insbesondere kann ein Verstärkungselement in einer Draufsicht, beispielsweise auch U-förmig oder O-förmig gebildet sein.

Ein Vereinzeln der Verbinder kann entweder unmittelbar in der Fügevorrichtung erfolgen, insbesondere während oder nach dem stoffschlüssigen Verbinden oder nachdem das Band aus der Fügevorrichtung entfernt wurde. Ein Vereinzeln kann dabei mittels Schneiden oder Stanzen erfolgen.

Insbesondere in einem Endlosprozess ist eine Anordnung der Verstärkungselemente an den beiden distalen Enden des Verbinders besonders gut dann möglich, wenn während des Fügens das Verstärkungselement auf das Band aufgebracht wird und insbesondere zwei Anschlusselemente in dem Verstärkungselement vorgesehen werden. Dann kann ein Auftrennen des Bandes mittig im Verstärkungselement, insbesondere zwischen den Anschlusselementen, entweder während oder nach dem Fügen als auch außerhalb der Fügevorrichtung erfolgen. Das so durchtrennte Band hat beidseitig der Trennstelle dann ein Verstärkungselement und insbesondere auch ein Anschlusselement.

Gemäß einem Ausführungsbeispiel wird vorgeschlagen, dass zunächst eine Mehrzahl an Blechen übereinander geschichtet einer Fügevorrichtung zugeführt wird. Diese Bleche werden ebenfalls in einem Endlosband zur Verfügung gestellt werden.

Bevorzugt sind die beiden äußeren Bleche als Teile des Verstärkungselementes gedacht. Zunächst werden diese äußeren Bleche, welche eine höhere, insbesondere zumindest eine 5-fache, bevorzugt zumindest eine 10-fache Materialstärke haben als die inneren Bleche (welche z.B. folienförmig sind) durchtrennt und abwechselnd wird auf der jeweiligen Seite (Oberfläche) jeweils ein Blech entfernt. Somit entsteht auf jeder Seite der übereinander geschichteten Bleche jeweils ein Bereich mit einer äußeren Lage des äußeren Bleches und einer Lage ohne das äußere Blech. Die verbleibenden äußeren Bleche liegen in Längserstreckung des Bandes an gleichen Positionen des Bandes, so dass sie einander gegenüberliegen.

Anschließend kann das Band mit den verbleibenden, außen liegenden Blechen stoffschlüssig verbunden werden, so dass die verbleibenden Bleche die Teile des Verstärkungselementes bilden.

Schließlich kann das Band in dem verbundenen Bereich aufgetrennt werden. Nach dem Auftrennen liegt beidseitig der Trennstelle jeweils das Verstärkungselement gebildet durch die äußeren Bleche an.

Insbesondere zur Verhinderung, dass sich Litzen oder Lagen des Bandes während des Fügeprozesses aus den Teilen des Verstärkungselementes herausschieben, sind seitliche Begrenzer vorgesehen. Mit diesen seitlichen Begrenzern wird verhindert, dass sich die Lagen des Bandes an den Seiten herausdrücken. Eine solche Fügeraumbegrenzung, insbesondere eine Schweißraumbegrenzung erfolgt durch die seitlichen Begrenzer. Diese haben insbesondere einen Abstand zueinander, so dass beidseitig des Fügewerkzeugs, insbesondere einer Sonotrode, ein Spalt mit eine Maß zwischen 1 mm und 0,02 mm, insbesondere 0,04 mm gebildet ist. Es entsteht somit ein Spalt zwischen dem Fügewerkzeug, insbesondere der Sonotrode und den seitlichen Begrenzern während des Fügeprozesses, wobei dieser Spalt vorzugsweise nicht größer ist als 1 mm und insbesondere zwischen 1 mm und 0,02 mm, insbesondere 0,04 mm liegt.

Nachfolgend wird der Gegenstand anhand einer Ausführungsbeispiele zeigenden Zeichnung näher erläutert. In der Zeichnung zeigen:
- Fig. 1a-c: Querschnitte durch Bandenden von Verbindern (nicht beansprucht);
- Fig. 2a-c: Draufsichten auf Bandenden von Verbindern (nicht beansprucht);
- Fig. 3a-b: Varianten von Verbindern (nicht beansprucht);
- Fig. 3c: eine beanspruchte Varianten eines Verbinders;
- Fig. 4: ein Längsschnitt eines Bandendes eines Verbinders;
- Fig. 5: eine schematische Ansicht eines Fügeverfahrens (nicht beansprucht);
- Fig. 6: eine schematische Ansicht eines Fügeverfahrens mit einem Endlosband (nicht beansprucht);
- Fig. 7: eine Ansicht eines Bandendes eines Verbinders (nicht beansprucht);
- Fig. 8a-b: ein Fügeverfahren mit seitlicher Begrenzung der Schweißzone;
- Fig. 9: ein kontinuierliches Fügen bei gleichzeitiger Laminierung von einer Mehrzahl von Bändern;
- Fig. 10a-c: Ansichten verschiedener Bänder als Verbinder (nicht beansprucht).

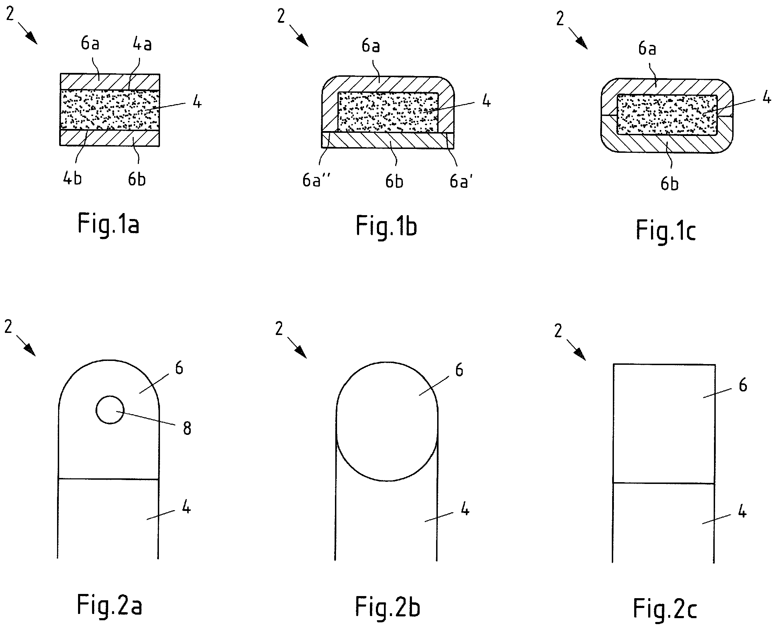

Fig. 1a zeigt einen Querschnitt eines Bandendes 2 eines aus einem mehrschichtigen metallischen Band 4 gebildeten Verbinders. In den Figuren ist das metallische Band 4 sowohl als Laminat als auch als Geflecht dargestellt. Die Figuren sind der Übersichtlichkeit halber nicht jeweils für Laminate und Geflechte dargestellt. Alle Figuren gelten für Laminate oder Geflechte im Sinne eines mehrschichtigen Bandes. Sowohl Laminate als auch Geflechte sind unter einem mehrschichtigen Band 4 zu verstehen.

Im Bereich des Bandendes ist das Band 4 zwischen zwei Teilen 6a, 6b eines Verstärkungselements 6 angeordnet. Zu erkennen ist, dass die Teile 6a, 6b an den Oberflächen der Oberseite 4a und der Unterseite 4b des Bandes 4 angeordnet sind. Die Teile 6a, 6b sind stoffschlüssig mit den Oberflächen an Oberseite 4a und Unterseite 4b verbunden. Ein Verbindungsverfahren ist beispielsweise ein Ultraschallschweißen. Auch kann ein Widerstandsschweißen, ein Laserschweißen oder auch ein Lötverfahren zum Einsatz kommen.

Das Band 4 ist bevorzugt aus Kupfer gebildet. Andere Metalle, wie oben beschrieben, sind ebenfalls möglich. Die Teile 6a, b sind bevorzugt aus Messing gebildet, andere Metalle oder Legierungen wie oben beschrieben sind ebenfalls möglich. Es ist möglich, dass die Teile 6a, b als Flachteile, insbesondere als flache Bleche gebildet sind. Die Oberflächen der Teile 6a, b, welche dem Band 4 zugewandt sind, sind stoffschlüssig mit dem Band 4 verbunden. Im Bereich des Bandendes 2 bildet sich ein kompakter Schweißknoten, wenn die Teile 6a, b mit dem Band 4 verschweißt werden.

Fig. 1b zeigt ein weiteres Ausführungsbeispiel eines Bandendes 2. Hierbei ist ein erstes Teil 6a als schalenförmiges Element gebildet. Die dem Teil 6b zugewandten, umgebogenen Kantenflächen 6a', 6a" sind mit dem Teil 6b stoffschlüssig verbunden. Auch hier ist das Band 4 respektive die darin vorhandenen Lagen bzw. Litzen kompaktiert und mit den Teilen 6a, 6b stoffschlüssig verbunden, insbesondere verschweißt.

Fig. 1c zeigt ein weiteres Ausführungsbeispiel eines Bandendes 2 eines Verbinders. Bei diesem Ausführungsbeispiel sind die beiden Teile 6a, b schalenförmig geformt. Die zueinander gebogenen Kanten der Teile 6a, b sind an den Kantenflächen stoffschlüssig miteinander verbunden. Auch hier ist das Band 4 zwischen den Teilen 6a, b kompaktiert und stoffschlüssig mit den Teilen 6a, b verbunden.

Fig. 2a zeigt eine Draufsicht auf ein Bandende. Zu erkennen ist, dass das Verstärkungselement 6 stirnseitig abgerundet, insbesondere halbkreisförmig ist. Mittig im Verstärkungselement 6 ist ein Aufnahmeelement 8 in der Form einer Aufnahmeöse gebildet.

Fig. 2b zeigt ein weiteres Ausführungsbeispiel eines Bandendes 2 eines Verbinders. Hier ist zu erkennen, dass das Verstärkungselement 6 an seinen beiden distalen Enden abgerundet, insbesondere halbkreisförmig ist.

Fig. 2c zeigt ein weiteres Ausführungsbeispiel eines Bandendes 2 eines Verbinders. Hier ist das Verstärkungselement rechteckig geformt.

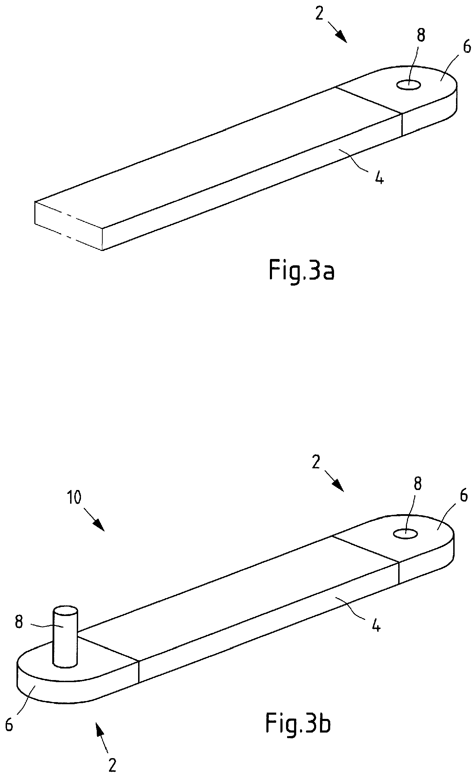

Fig. 3a zeigt eine Teilansicht eines Bandendes 4 eines Verbinders. Zu erkennen ist, dass am Ende des Bandes 4 das Verstärkungselement 6 mit dem Aufnahmeelement 8 angeordnet ist. Das Aufnahmeelement 8 ist hier als Öffnung angeordnet. Durch das Verstärkungselement 6 wird verhindert, dass beim stoffschlüssigen Verbinden der Teile 6a, b mit dem Band 4 die äußeren Schichten oder Litzen des Bandes 4 beschädigt oder abgerissen werden.

Fig. 3b zeigt ein weiteres Ausführungsbeispiel eines Verbinders 10. Der Verbinder 10 ist an seinen beiden Bandenden 2 mit jeweils einem Verstärkungselement 6 versehen. Hier ist zu erkennen, dass ein Aufnahmeelement 8 auch als Bolzen gebildet sein kann, der auf dem Verstärkungselement 6 aufgebracht ist.

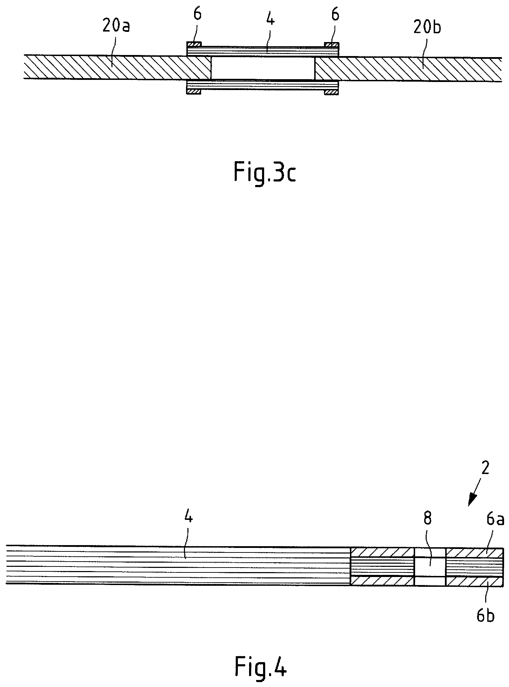

Fig. 3c zeigt ein weiteres Ausführungsbeispiel eines Verbinders 10. Dabei sind zwei jeweils aus Vollmaterial gebildete Leitungen 20a, b, beispielsweise Flachleitungen vorgesehen. Die Leitungen 20a, b können aus Kupfer, Kupferlegierungen, Aluminium, Aluminiumlegierungen oder dergleichen gebildet sein.

Die Leitungen 20a, b sind jeweils an einem stirnseitigen Ende von einem Band 4 umgriffen. Das Band 4 kann ein Geflechtband sein. Das Band 4 kann die Leiter 20a, b vollstänssig umgreifen. Das Band 4 kann als Schlauch gebildet sein. Die Leitung 20a, b ist stirnseitig abisoliert so dass in einem abisolierten Bereich das Band 4 die Leiter 20a, b umgreift. Auch können die Leitungen 20a, b in den Schlauch eingesteckt sein.

Um das Band kann jeweils ein Verstärkungselement 6 gelegt sein. Das Verstärkungselement 6 kann dabei zumindest im Bereich einer Schweißnaht vorgesehen sein, insbesondere kann das Verstärkungselement 6 das Band 4 umlaufend im Bereich des stirnseitigen Endes der jeweiligen Leitung 20a, b umgreifen.

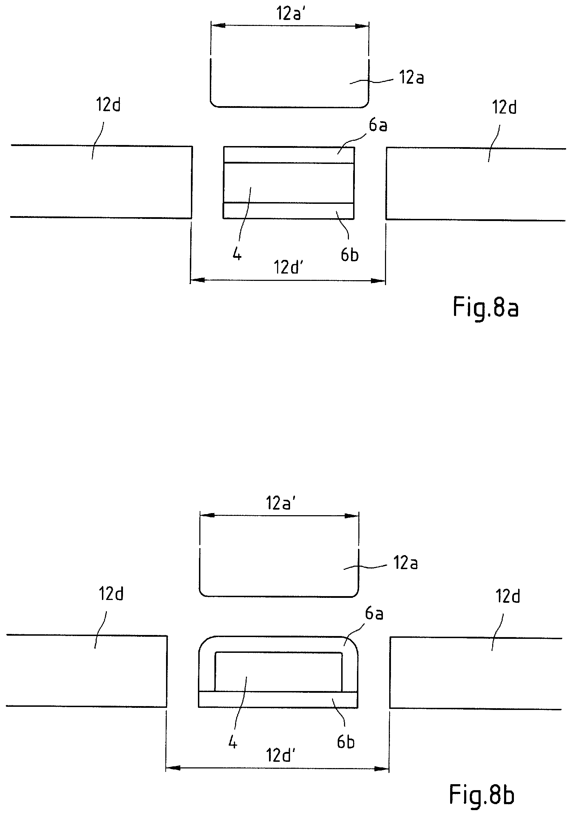

Beim Ultraschallschweißen kann ein Seitenschieber 12d, wie in Fig. 8a gezeigt, das Verstärkungselement 6 und/oder das Band 4 an jeweils zwei einander gegenüberliegenden Seiten an die jeweilige Leitung 20a, b andrücken. Dann kann das Band 4 an den noch freien Seiten zwischen einer Sonotrode und einem Amboss eingespannt werden und mittels Ultraschall kann das Verstärkungselement 6, das Band 4 und das Ende des Leiters 20a, b verschweißt werden.

Fig. 4 zeigt einen Längsschnitt durch ein Bandende 2 eines Verbinders 10. Hier ist zu erkennen, dass das Aufnahmeelement 6 als Durchgangsöffnung sowohl durch die Teile 6a, b als auch das Band 4 gebildet ist.

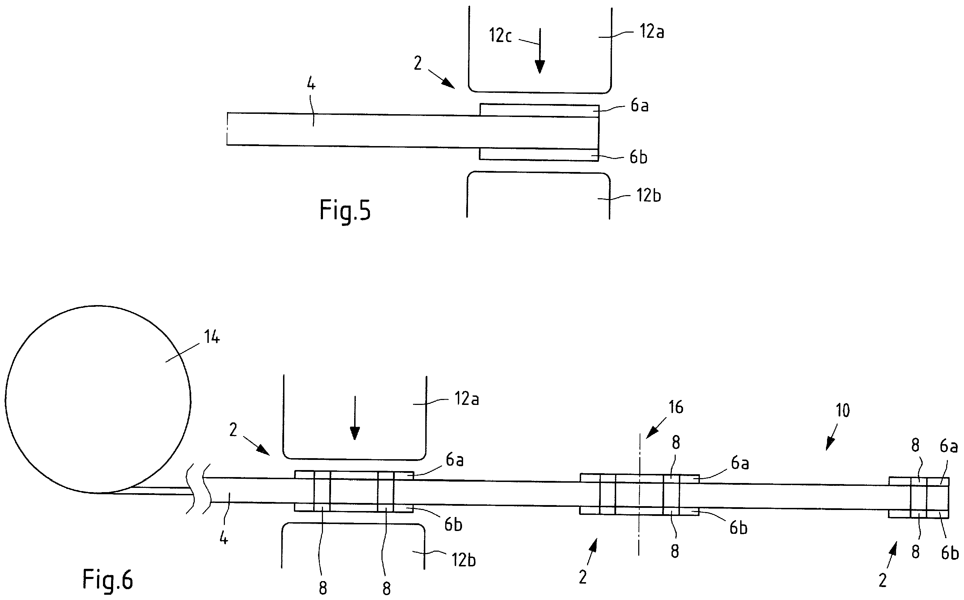

Fig. 5 zeigt ein Verfahren zum Fügen eines Bandes 4 mit den Teilen 6a, b des Verstärkungselementes 6. Hierzu wird das Bandende 2 zwischen eine Sonotrode 12a und einen Amboss 12b bewegt. Anschließend wird die Sonotrode 12a in der Richtung 12c auf den Amboss 12b gepresst, wobei das Band 4 mit den Teilen 6a, b kompaktiert und stoffschlüssig mittels Ultraschall verschweißt wird.

Fig. 6 zeigt einen Ablauf eines Herstellungsverfahrens, bei dem das Band 4 von einer Rolle 14, beispielsweise einem Coil abgewickelt wird. Ober- und unterseitig des Bandes 4 werden die Teile 6a, b zugeführt und mittels Amboss 12b und Sonotrode 12a auf dem Band 4 mittels Ultraschall verschweißt. Während dieses Vorgangs oder danach ist es möglich, die Aufnahmeelemente 8 in das Bandende 2 einzuprägen, beispielsweise durch Stanzen oder Schneiden. Das Band 4 wird nach dem Fügeprozess weiter transportiert und mittels einer Trenneinrichtung entlang einer Trennlinie 16 durchtrennt. Die Trennlinie 16 verläuft im mittig der zuvor aufgebrachten Teile 6a, b, insbesondere zwischen den beiden eingeprägten Aufnahmeelementen 8. Das Trennen entlang der Trennlinie 16 kann ebenfalls unmittelbar nach dem Fügen, entsprechend dem Einprägen des Aufnahmeelementes 8 erfolgen.

Nach dem Durchtrennen entlang der Trennlinie 16 ist das Teil 10 vereinzelt und an beiden Enden 2 des Teils 10 sind die Teile 6a, b des Verstärkungselements 6 vorgesehen. Dies zeigt einen kontinuierlichen Bearbeitungsprozess, bei dem kontinuierlich Band 4 zugeführt wird und am Ende eine Vereinzelung der Verbinder 10 derart stattfindet, dass beidseitig einer Trennlinie 16 jeweils ein Verstärkungselement 6 an dem Band 4 gebildet ist.

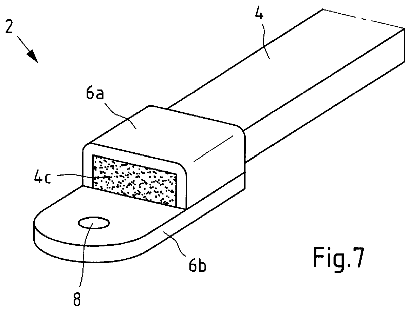

Fig. 7 zeigt ein bevorzugtes Ausführungsbeispiel, bei dem ein Teil 6b stirnseitig über die Stirnseite 4c des Bandes 4 hinausragt. Das Teil 6b ist dabei als Flachteil gebildet. Das Teil 6b kann als Anschlussfahne mit einem Aufnahmeelement 8 gebildet sein. Zu erkennen ist, dass das Teil 6b als Flachteil gebildet ist, wohingegen das Teil 6a als schalenförmiges Element zur Aufnahme des Bandes 4 gebildet ist. Diese Anordnung entspricht in etwa der Anordnung gemäß der Fig. 1b.

Fig. 8a zeigt die Begrenzung des Schweißraums. Über zwei Seitenschieber wird der Schweißraum der Sonotrode 12a begrenzt. Die Sonotrode 12a hat eine Breite 12a'. Die Seitenschieber 12d haben einen Abstand 12d` zueinander. Der Abstand 12d` ist geringfügig größer als der Abstand 12a'. Die Breite des Bandes 4 entspricht in etwa der Breite 12a'. Durch die Seitenschieber 12d wird somit verhindert, dass seitlich Elemente des Bandes 4 während des Verschweißens mit der Sonotrode 12a herausgedrückt werden. Der Abstand zwischen den Seitenflächen des Bandes 4 und dem jeweiligen Seitenschieber 12d beträgt vorzugsweise weniger als 1 mm, zwischen 1 und 0,02 mm, insbesondere 0,04 mm.

Fig. 8b zeigt ein ähnliches Ausführungsbeispiel, bei dem jedoch das Teil 6a als schalenförmiges Element gebildet ist, wohingegen das Teil 6b als Flachteil gebildet ist. Durch die Seitenschieber 12d wird verhindert, dass beim Anpressen der Sonotrode 12 gegen das Teil 6a die umgebogenen Kanten nach außen gepresst werden und gegebenenfalls von der Oberfläche des Flachteils 6b abrutschen.

In den Fig. 8a, b ist der Abstand zwischen den Seitenschiebern 12 d und den Kantenflächen des Bandes 4 bzw. der Oberfläche des Teils 6a vergrößert dargestellt, in Wirklichkeit ist dieser Abstand jedoch im Verhältnis zur Breite des Bandes 4 sehr viel kleiner. Insbesondere ist der Abstand kleiner als die Stärke des Teils 6a.

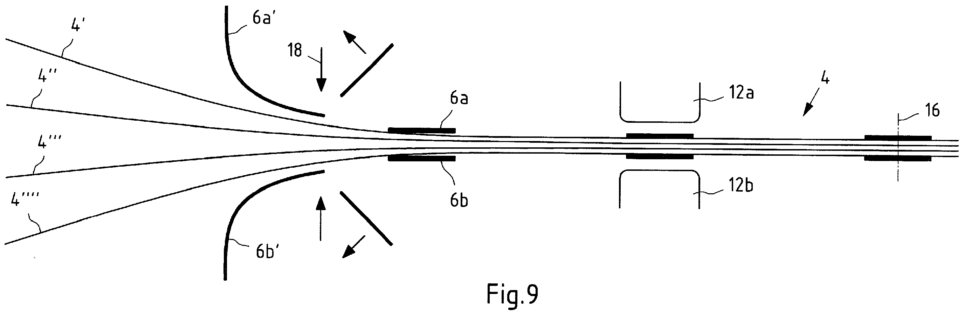

Fig. 9 zeigt ein weiteres Ausführungsbeispiel eines Herstellungsverfahrens, bei dem in einem kontinuierlichen Prozess sowohl das Band 4 laminiert wird, als auch die Teile 6a, b auf das Band 4 aufgebracht werden. Eine Mehrzahl an Bändern 4', 4",4‴,4ʺʺ, beispielsweise mit Stärken von 0,1 mm und kleiner, insbesondere auch Folien, werden in einem kontinuierlichen Prozess, beispielsweise von einer Rolle abgewickelt, einem Laminierprozess zugeführt. Gleichzeitig werden Bänder 6a', b" auf die Außenseiten der Bänder 4'-4"" aufgebracht.

Durch eine Trenneinrichtung 18 werden die Bänder 6a', b' aufgetrennt und es bleiben jeweils nur in den Bereichen, in denen das Verstärkungselement 6 gebildet werden soll, Teile 6a, b der Bänder 6a', b' auf dem Laminat der Bänder 4'-4"". Zunächst werden die die Bänder 6a', b' auf dem Laminat der Bänder 4`-4"" artgerecht fixiert. Anschließend werden die Bänder 4 mit den Teilen 6a, b in eine Fügevorrichtung bewegt und dort beispielsweise mittels einer Sonotrode 12a auf einen Amboss 12b gepresst. Hierbei erfolgt ein stoffschlüssiges Verbinden der Teile 6a, b mit den Bändern 4'-4ʺʺ.

Anschließend oder gleichzeitig kann entlang einer Trennlinie 16 ein Durchtrennen des Bandes 4 erfolgen, wie dies bereits in Verbindung mit Fig. 6 dargestellt wurde. Das Verbinden, Stanzen und Auftrennen in der Fig. 9 kann entsprechend der Fig. 6 erfolgen. Im Unterschied zu der Fig. 6 werden jedoch bevorzugt die Bänder 4'-4"" in einem einzigen Prozess mit laminiert und die Teile 6a, b werden von Bändern 6a', b' zugeführt.

Es versteht sich, dass die Materialstärken der Bänder 6a', b' zum Einen verschieden sein können zu den Materialstärken der Bänder 4', 4". Insbesondere können die Materialstärken das 5- bis 10-fache, jedoch auch das 20- bis das 100-fache der Materialstärken der Bänder 4'-4" betragen. Zum Anderen können die Materialstärken der Bänder 6a', b' unterschiedlich zueinander sein.

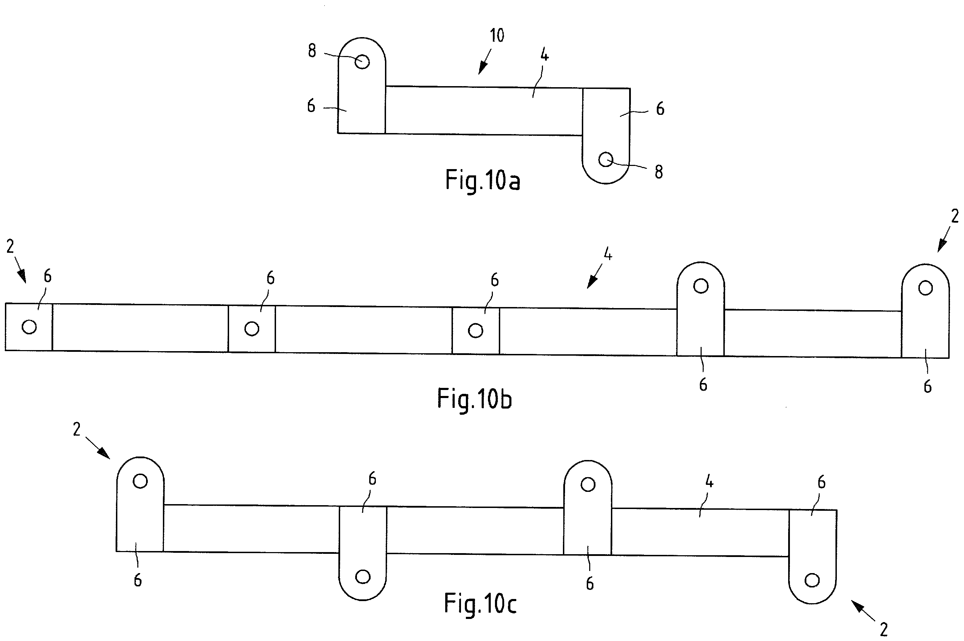

Fig. 10a zeigt ein Ausführungsbeispiel eines Verbinders 10, bei dem die Verstärkungselemente 6 in der Form von Anschlussfahnen über die seitlichen Kanten des Bandes 4 hinausragen. Die Anschlusselemente 8 sind im Bereich des das Band 4 überragenden Teils vorgesehen. Die Verstärkungselemente 6 können in unterschiedlichen Richtungen seitlich über das Band 4 hinaus stehen. Es ist möglich, dass nur ein Teil 6a, b eines Verstärkungselementes 6 über die seitliche Kante des Bandes 4 hinausragt.

Fig. 10b zeigt ein Ausführungsbeispiel, bei dem zwischen den Bandenden 2 eine Anzahl von Verstärkungselementen 6 entlang des Bandes 4 vorgesehen sein können. Die Verstärkungselemente 6 können mit der Breite des Bandes 4 fluchten oder wie rechts gezeigt, über eine seitliche Kante eines Bandes 4 hinausragen. Auch können die an den Bandenden 2 angeordneten Verstärkungselemente 6 unterschiedlich geformt sein und beispielsweise über eine seitliche Kante des Bandes 4, über eine stirnseitige Kante des Bandes 4 hinausragen oder auch ausschließlich auf dem Band 4 aufliegen.

Fig. 10c zeigt ein weiteres Ausführungsbeispiel, bei dem die Verstärkungselemente 6 alternierend über die seitliche Kante des Bandes 4 zwischen den Bandenden 2 hinausragen.

Es versteht sich, dass weitere Konfigurationen möglich sind. Insbesondere lassen sich die hier beschriebenen Ausführungsbeispiele frei miteinander kombinieren und Permutationen von Merkmalen sind möglich.

### Bezugszeichenliste

- 2: Bandende
- 4: Band
- 4a: Oberseite
- 4b: Unterseite
- 4c: Stirnseite
- 4'-'4"": Folien/Bänder
- 6a,b: Teil
- 6a', 6b': Bänder
- 6: Verstärkungselement
- 8: Aufnahmeelement
- 10: Verbinder
- 12a: Sonotrode
- 12a': Abstand
- 12b: Amboss
- 12c: Richtung
- 12d: Seitenschieber
- 12d`: Abstand
- 14: Rolle
- 16: Trennlinie
- 18: Trennvorrichtung
- 20a, b: Leiter

## Patentansprüche

1. Flexibler Verbinder mit
- einem mehrschichtigen metallischen Band (4),
- wobei die Schichten des metallischen Bandes (4) im Bereich des Bandendes (2) stoffschlüssig miteinander verbunden sind, wobei
- am Bandende (2) ein Verstärkungselement (6) angeordnet ist, wobei das Verstärkungselement (6) mit dem Band (4) stoffschlüssig verbunden ist, und
- zumindest zwei jeweils aus einem Vollmaterial gebildete Leiter (20a, 20b),**dadurch gekennzeichnet,**
- **dass** das mehrschichtige Band (4) ein als Schlauch gebildetes Geflecht ist,
- **dass** ein stirnseitiges Ende eines jeweiligen der zwei Leiter (20a, 20b) in den Schlauch eingesteckt ist und
- **dass** das Band (4) mit dem jeweiligen Leiter (20a, 20b) unter Verwendung des Verstärkungselements (6) verschweißt ist.

2. Verbinder nach Anspruch 1,
**dadurch gekennzeichnet,**
- **dass** das Band (4) aus Kupfer, einer Kupferlegierung, Aluminium oder einer Aluminiumlegierung gebildet ist und dass das Verstärkungselement (6) aus Kupfer, einer Kupferlegierung, Aluminium oder einer Aluminiumlegierung gebildet ist.

3. Verbinder nach einem der vorangehenden Ansprüche,
**dadurch gekennzeichnet,**
- **dass** das Verstärkungselement (6) aus zumindest einem, vorzugsweise zumindest zwei Teilen, insbesondere Blechen gebildet ist, wobei das zumindest eine Teil an einer Oberfläche des Bandes (4) anliegt oder die zumindest zwei Teile an einander gegenüberliegenden Oberflächen des Bandes (4) anliegen.

4. Verbinder nach einem der vorangehenden Ansprüche,
**dadurch gekennzeichnet,**
- **dass** das Verstärkungselement (6) aus zumindest einem schalenförmigen Element gebildet ist, und das schalenförmige Element das Bandende aufnimmt.

5. Verbinder nach Anspruch 4,
**dadurch gekennzeichnet,**
- **dass** das schalenförmige Element entlang seiner Außenkanten stoffschlüssig mit einem zweiten Blech stoffschlüssig verbunden ist.

6. Verbinder nach einem der vorangehenden Ansprüche,
**dadurch gekennzeichnet,**
- **dass** zumindest ein Teil des Verstärkungselements (6) das Bandende (2) seitlich und/oder stirnseitig überragt.

7. Verbinder nach einem der vorangehenden Ansprüche,
**dadurch gekennzeichnet,**
- **dass** die Teile des Verstärkungselements (6) voneinander verschiedene Blechdicken aufweisen.

8. Verbinder nach einem der vorangehenden Ansprüche,
**dadurch gekennzeichnet,**
- **dass** er als Steckelement oder als Batteriezellenverbinder gebildet ist.

9. Verbinder nach einem der vorangehenden Ansprüche,
**dadurch gekennzeichnet,**
- **dass** zumindest ein Teil des Verstärkungselements (6) als Anschlussfahne gebildet ist oder dass mit dem Verstärkungselement (6) eine Anschlussfahne stoffschlüssig verbunden ist.

10. Verbinder nach einem der vorangehenden Ansprüche,
**dadurch gekennzeichnet,**
- **dass** zwischen den beiden distalen Enden des Bandes (4) zumindest ein weiteres Verstärkungselement (6) angeordnet ist.

## Claims

1. Flexible connector with
- a multi-layered metallic strip (4),
- wherein the layers of the metallic strip (4) being bonded to one another in the region of the end (2) of the strip, wherein
- a reinforcing element (6) is arranged at the end (2) of the strip, the reinforcing element (6) being bonded to the strip (4), and
- at least two conductors (20a, 20b) made from solid material,
**characterized in,**
- **that** the multi-layered strip (4) is formed as a braided hose,
- the a front face of a respective one of the two conductors (20a, 20b) is slid into the hose and,
- **that** the strip (4) is welded to the respective conductor using the reinforcing element (6).

2. Connector according to claim 1,
**characterized in**
- **that** the strip (4) is formed from copper, a copper alloy, aluminium or an aluminium alloy and in that the reinforcing element (6) is formed from copper, a copper alloy, aluminium or an aluminium alloy.

3. Connector according to one of the preceding claims,
**characterized in**
- **that** the reinforcing element (6) is formed from one, preferably to parts, in particular sheets, wherein at the least one part lays against a surface of the strip (4) or the at least two part lay at opposite surfaces of the strip (4).

4. Connector according to one of the preceding claims,
**characterized in**
- **that** the reinforcing element (4) of formed from a at least one shell-shaped element and the shell-shaped element accommodates the end of the strip.

5. Connector according to claim 4,
**characterized in**
- **that** the shell-shaped element is bonded along its outer edges to a second metal sheet.

6. Connector according to one of the preceding claims,
**characterized in**
- **that** at least part of the reinforcing element (6) projects laterally and/or on the end face beyond the end of the strip (4).

7. Connectors according to one of the preceding claims,
**characterized in**
- **that** the parts of the reinforcing element (6) have sheet thicknesses which differ from one another.

8. Connector according to one of the preceding claims,
**characterized in**
- **that** it is formed as a plug-in element or as a battery cell connector.

9. Connector according to one of the preceding claims,
**characterized in**
- **that** at least a part of the reinforcing element (6) is formed as a connecting lug, or in that a connecting lug is materially bonded to the reinforcing element (6).

10. Connector according to one of the preceding claims,
**characterized in that**
- at least one further reinforcing element (6) is arranged between the two distal ends of the strip (4).

## Revendications

1. Connecteur flexible avec
- une bande métallique multicouche (4),
- où les couches de la bande métallique (4) sont reliées entre elles dans la zone de l'extrémité (2) de la bande par une liaison de matière, où
- un élément de renforcement (6) est disposé à l'extrémité de la bande (2), où l'élément de renforcement (6) est relié à la bande (4) par liaison de matière, et
- au moins deux conducteurs (20a, 20b) formés chacun d'un matériau plein,
**caractérisé en ce**
- **que** la bande multicouche (4) est un treillis formé comme un tuyau,
- **qu'**une extrémité frontale de chacun des deux conducteurs (20a, 20b) est enfichée dans le tuyau et
- **que** la bande (4) est soudée au conducteur respectif (20a, 20b) en utilisant l'élément de renforcement (6).

2. Connecteur selon la revendication 1,
**caractérisé en ce**
- **que** la bande (4) est formée de cuivre, d'un alliage de cuivre, d'aluminium ou d'un alliage d'aluminium et que l'élément de renforcement (6) est formée de cuivre, d'un alliage de cuivre, d'aluminium ou d'un alliage d'aluminium.

3. Connecteur selon l'une des revendications précédentes,
**caractérisé en ce,**
- **que** l'élément de renforcement (6) est formé d'au moins une, de préférence d'au moins deux parties, en particulier des tôles, où l'au moins une partie est en contact avec une surface de la bande (4) ou les au moins deux parties sont en contact avec des surfaces opposées de la bande (4).

4. Connecteur selon l'une des revendications précédentes,
**caractérisé en ce**
- l'élément de renforcement (6) est formé d'au moins un élément en forme de coque et l'élément en forme de coque reçoit l'extrémité de la bande.

5. Connecteur selon la revendication 4,
**caractérisé en ce**
- **que** l'élément en forme de coque est lié par liaison de matière le long de ses bords extérieurs avec une deuxième tôle par liaison de matière.

6. Connecteur selon l'une des revendications précédentes,
**caractérisé en ce**
- **qu'**au moins une partie de l'élément de renforcement (6) dépasse l'extrémité de la bande (2) latéralement et/ou frontalement.

7. Connecteur selon l'une des revendications précédentes,
**caractérisé en ce**
- **que** les parties de l'élément de renforcement (6) ont des épaisseurs de tôle différentes les unes des autres.

8. Connecteur selon l'une des revendications précédentes,
**caractérisé en ce**
- **qu'**il est formé comme élément enfichable ou comme connecteur de cellule de batterie.

9. Connecteur selon l'une des revendications précédentes,
**caractérisé en ce,**
- **qu'**au moins une partie de l'élément de renforcement (6) est formée comme languette de raccordement ou qu'une languette de raccordement est reliée à l'élément de renforcement (6) par une liaison de matière.

10. Connecteur selon l'une des revendications précédentes,
**caractérisé en ce**
- **qu'**entre les deux extrémités distales de la bande (4), au moins un autre élément de renforcement (6) est arrangé.
